# EUROPEAN PATENT SPECIFICATION

(11) **EP 1 088 750 B1**
(45) Date of publication and mention of the grant of the patent: **30.11.2005**
(21) Application number: 00402625.8
(22) Date of filing: 21.09.2000
(51) Int. Cl.: B62J 25/00, B62K 11/10

(54) **Scooter floor step structure**
Fussstützstruktur für motorrollerartiges Fahrzeug
Structure de repose-pieds pour véhicule du type scooter

(30) Priority: 30.09.1999 JP 28049099
(43) Date of publication of application: 04.04.2001
(73) Proprietor: HONDA GIKEN KOGYO KABUSHIKI KAISHA, Minato-ku, Tokyo (JP)
(72) Inventor: Kondo, Nobuyuki, c/o K.K. Honda Gijutsu Kenkyusho, Wako-shi, Saitama (JP); Nakano, Junichi, c/o K.K. Honda Gijutsu Kenkyusho, Wako-shi, Saitama (JP)
(74) Representative: Poulin, Gérard

(56) References cited:
- FR-A- 2 748 714
- PATENT ABSTRACTS OF JAPAN vol. 1999, no. 04, 30 April 1999 (1999-04-30) & JP 11 005578 A (KAWASAKI HEAVY IND LTD), 12 January 1999 (1999-01-12)
- PATENT ABSTRACTS OF JAPAN vol. 1996, no. 07, 31 July 1996 (1996-07-31) & JP 08 080886 A (SUZUKI MOTOR CORP), 26 March 1996 (1996-03-26)
- PATENT ABSTRACTS OF JAPAN vol. 014, no. 410 (M-1020), 5 September 1990 (1990-09-05) & JP 02 158468 A (Y II C:KK), 18 June 1990 (1990-06-18)
- PATENT ABSTRACTS OF JAPAN vol. 016, no. 538 (M-1335), 9 November 1992 (1992-11-09) & JP 04 201685 A (SUZUKI MOTOR CORP), 22 July 1992 (1992-07-22)

## Description

### Field of the Invention

The present invention relates to improvement to a scooter floor step structure.

### Related Arts

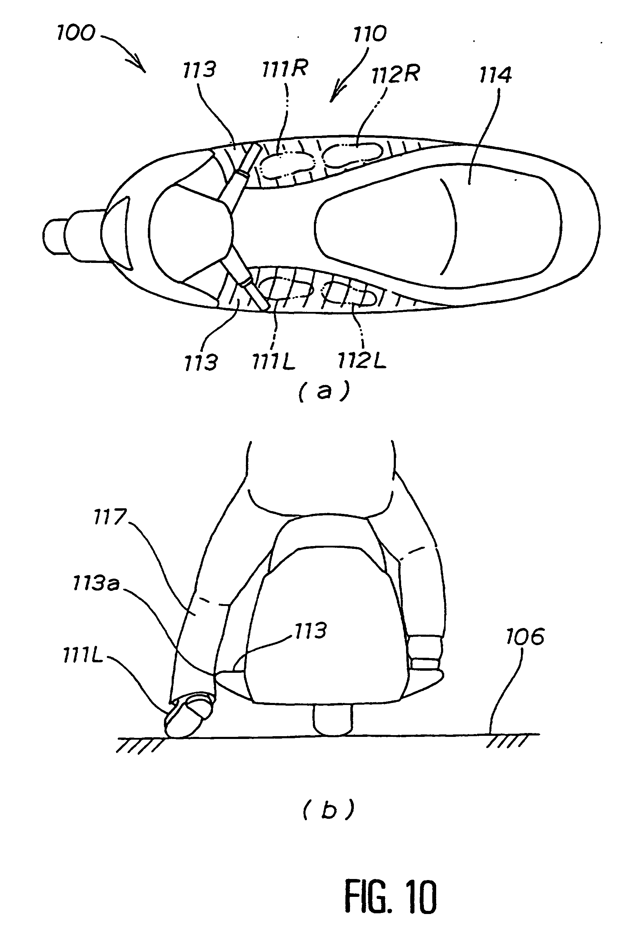

Figs. 10 (a) and 10 (b) are diagrams explaining a conventional scooter floor step structure. Fig. 10 (a) is a plan view showing a conventional scooter floor step structure 110; Fig. 10 (b) is a rear view showing a conventional scooter floor step structure 110.

In Fig. 10 (a), a floor step structure for a large two-seater scooter 100 is a structure in which floor steps 113, 113 capable of commonly receiving the rider's feet 111L, 111R and a passenger's feet 112L, 112R, are provided below the seat 114. The floor steps 113, 113 are of improved convenience as, for example, the rider and the passenger can move the positions of their feet 111L, 111R, 112L, 111R while riding the scooter.

However, in Fig. 10 (b), the rider generally has one of his feet 111L put on the road 106 when he stops driving due to traffic signals and so on. At that time, the rider's foot 111L may contact the edge 113a of the floor step 113, and his clothes 117 may become dirty.

Thus, as a scooter floor step structure allowing a rider to easily put his foot on the road, for example, "a scooter foot board structure", disclosed in Japanese Patent Laid-open No. Hie 11-5578, is known. This document discloses a two-seater scooter according to the preamble of claim 1.

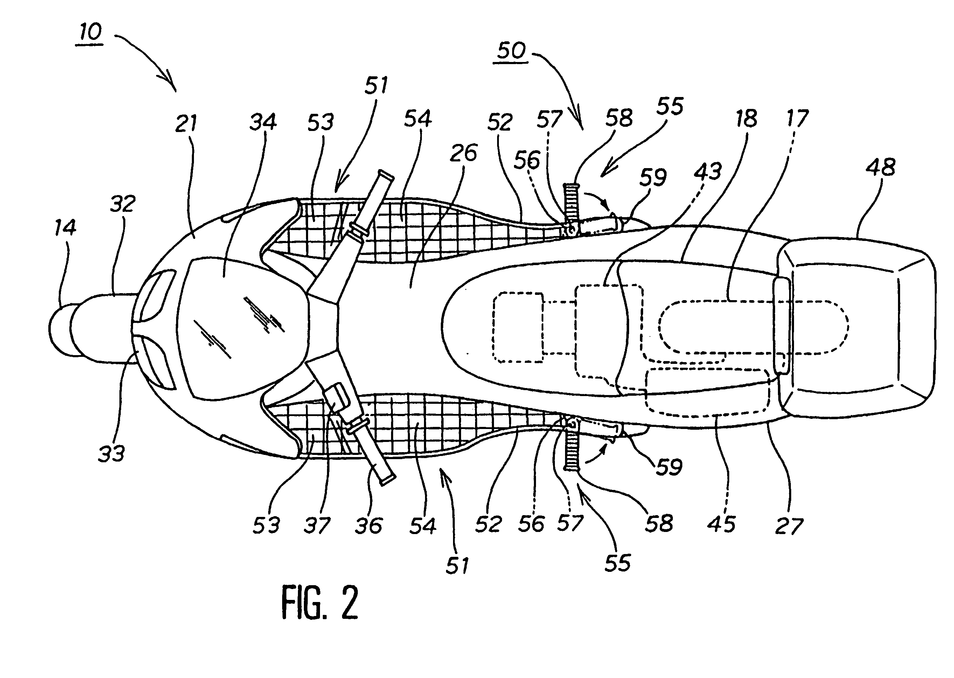

In this technique, according to Fig. 2 of the publication, a foot board 10 is provided for receiving the rider's and passenger's feet, and a cut-in recess 11 is formed on the foot board 10 so that the rider can easily put his foot on the road.

### Problem to be Solved by the Invention

However, although a cut-in recess 11 is provided to improve the ease with which the rider puts his foot on the road, his clothes are nevertheless likely be soiled when he puts his foot on the road as he inserts his foot into the recess 11. Thus, there is still room for improvement in this respect.

In this view, the object of the present invention is to provide a scooter floor step structure which can further facilitate the rider's putting his foot on the road.

### Means to solve the Problem

In order to achieve the above object, there is provided a two-seater scooter according to claim 1.

When two people ride on the scooter, the retracted passenger step is extended to be used as a passenger's dedicated step. When a rider alone rides on the scooter, the passenger step is retracted.

While stopping due to a traffic signal etc., the rider puts his foot on- the road via the recess. Thus, the ease with which the rider can put his foot on the road can be improved.

### Brief Description of the Drawings

A preferred embodiment of the present invention will be described with reference to the attached drawings. Note that the drawings should be looked at according to the direction of the reference numerals.
Fig. 1 is a front view showing a scooter having a floor step structure in a preferred embodiment according to the present invention.
Fig. 2 is a plan view showing a scooter having a floor step structure in the preferred embodiment according to the present invention.
Fig. 3 is a diagram explaining a first function of a scooter floor step structure according to the present invention.
Fig. 4 is a diagram explaining a second function of a scooter floor step structure according to the present invention.
Fig. 5 is a diagram explaining a third function of a scooter floor step structure according to the present invention.
Fig. 6 is a side view showing another scooter having a floor step structure.
Fig. 7 is a plan view showing the scooter of figure 6.
Fig. 8 is a side view showing another scooter having a floor step structure.
Fig. 9 is a plan view showing the scooter of figure 8.
Fig. 10 is a diagram showing a conventional scooter floor step structure.

### Preferred Enbodimentf of the Present Intention

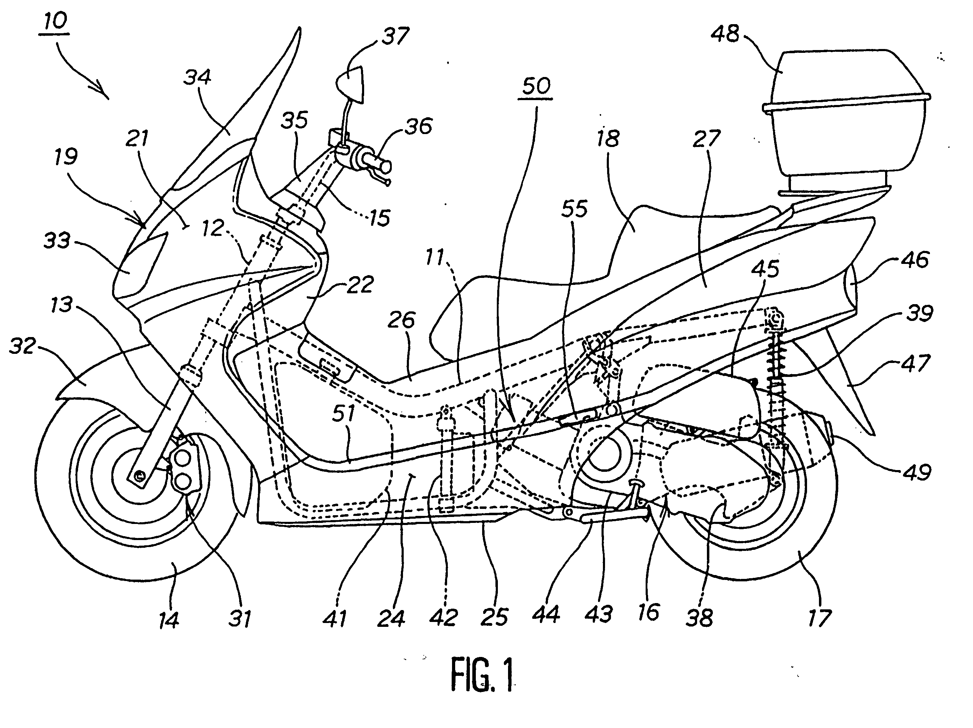

Fig. 1 is a front view showing a scooter having a floor step structure in a preferred embodiment of the present invention.

The scooter 10 is a large two-seater motorcycle mainly comprising a vehicle body frame 11, a front fork 13 attached to a head pipe 12 of the vehicle body frame 11, a front wheel 14 attached to the front fork 13, a handle communicating with the front fork 13, a swing unit 16 installed to the upper rear portion of the vehicle body frame 11, a rear wheel 17 attached to the rear portion of the swing unit 16, a seat 18 arranged on the upper rear portion of the vehicle frame 11, and a body cover 19 covering the vehicle body frame 11.

The body cover 19 comprises a front cover 21 covering the front portion of the head pipe 12 and the upper portion of the front wheel 14, an inner cover 22 covering the rear portion of the front cover 21, right and left floor steps 51 (only the one on this side is shown in the drawing) where the rider puts his feet, right and left floor skirts 24 extending downward from the outer edges of the floor steps 51, an under cover 24 covering the space between the lower edges of the floor skirts 24, a center cover 26 extending backward from the inner cover 22 and covering the vehicle body frame 11 at the middle portion thereof in the longitudinal direction thereof, and side covers 27 extending backward from the center cover 26 and covering both rear flank surfaces of the vehicle body frame 11.

In the drawing, 31 is a hydraulic front disk brake, 32 is a front fender, 33 is a head lamp, 34 is a window screen, 35 is a handle cover, 36 is a handle grip, 37 is a mirror, 38 is a swing arm, 39 is a rear suspension, 41 is a fuel tank, 42 is an engine cooling radiator, 43 is an engine, 55 is right and left passenger steps (only the one on this side is shown), 44 is a main stand, 45 is an air cleaner, 46 is a tail lamp, 47 is a rear fender, 48 is a storage box, 49 is a muffler, and 50 is a scooter floor step structure, which will be described with reference to the following drawings (hereinafter referred to as a floor step structure 50).

Fig. 2 is a plan view of a scooter having a floor step structure in the preferred embodiment of the present invention, showing a floor step structure 50.

The floor step structure 50 is a floor step structure for a two-seater scooter, in which recesses 52, 52 are formed, opening sideward, at the tailing portions of the floor steps 51, 51 which receive the rider's feet, and passenger steps 55, 55 are retractably arranged extending in the recesses 52, 52.

The floor steps 51 comprises a sloping portion 53 formed in the lower portion prior to the seat 18, a flat portion 54 extending backward from the sloping portion 53, and a recess 52 formed in the trailing portion of the flat portion 54. As the rider can put his foot on the road via the recess 52, the easiness with which the rider can put his foot on the road, for example, at the time of a signal stop can be improved.

The passenger step 55 comprises a supporting portion 56 formed extending over the recess 52 of the floor step 51 and a bar step 58 attached to the supporting portion 56 via a supporting pin 57 so as to be retractable in the front-rear direction. That is, as the bar step is attached retractably, when the rider alone rides on the scooter, the passenger steps 55 can be retracted so that a larger space can be ensured for the recess 52. Thus, the ease with which the rider can put his feet on the road can be improved. Note that 59, 59 are storage sections for storing the bar steps 58, 58,

The floor step structure 50 is of improved convenience due to separation of the floor steps 51, 51 and the passenger steps 55, 55. In addition, the floor step structure 50 extending toward the retractably attached passenger steps 55, 55 creates a suitable atmosphere for a two-seater large scooter so that the design of the scooter 10 can be improved.

Operation of the above described floor step structure 50 will next be described.

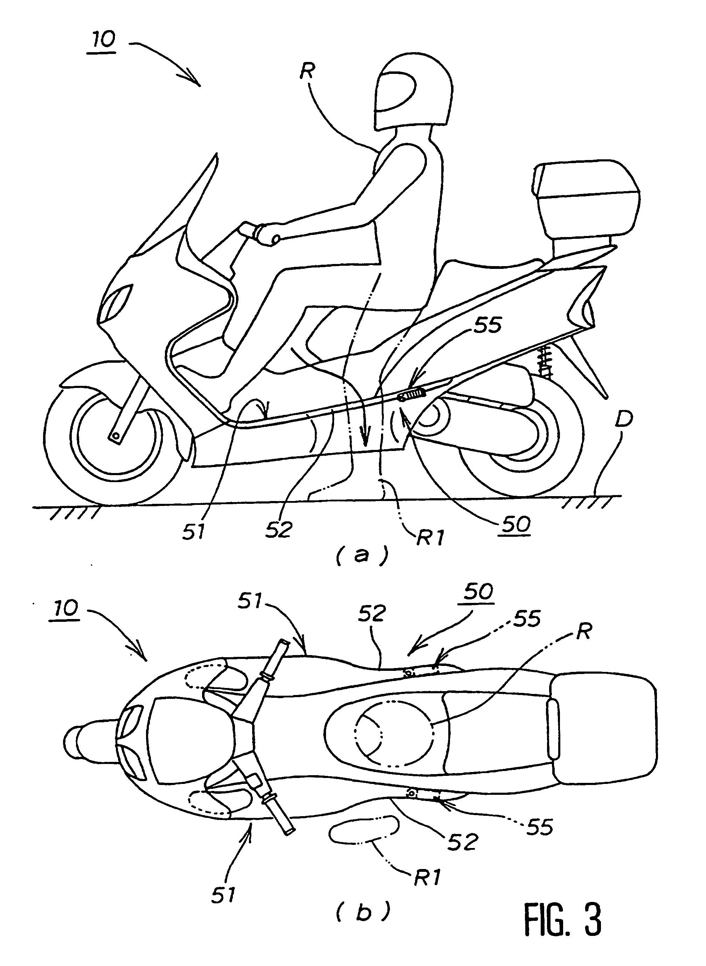

Figs. 3 (a) and 3(b) are diagrams explaining a first function of a scooter floor step structure of the present invention, showing the state of a floor state structure 50 when a rider R alone rides on the scooter.

In Fig. 3(a), when a rider R alone rises on the scooter, the passenger step 55 remains retracted while the scooter is running. While stopping, the rider R puts his foot R1 on the road D via the recess 52 as indicated by the arrow.

In Fig. 3(b), as the passenger steps 55, 55 remain retracted when the rider R alone rides on the scooter, a larger area can be ensured for the recess 52, and, as a result, the ease with which the rider can put his foot on the road can be improved.

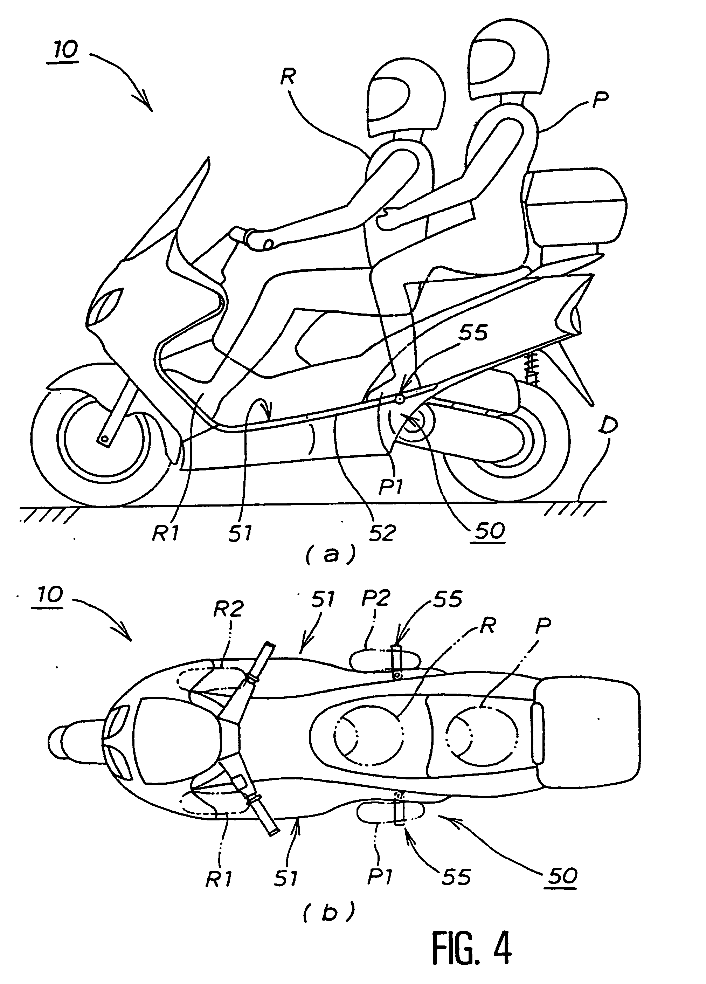

Figs. 4(a) and 4 (b) are diagrams explaining a second function of the scooter floor step structure of the present invention, showing the state of the floor step structure 50 when two people, namely, a rider R and a passenger P, ride on the scooter.

In Fig. 4 (a), the passenger step 55 remains extended for use.

In Fig. 4 (b), the rider R puts his feet R1, R2 on the floor steps 51, while the passenger P puts his feet P1, P2 on the passenger steps 55.

As they are dedicated steps, the passenger steps 55 can be formed wide in the vehicle width direction so that the passenger P can easily put his feet P1, P2 on them.

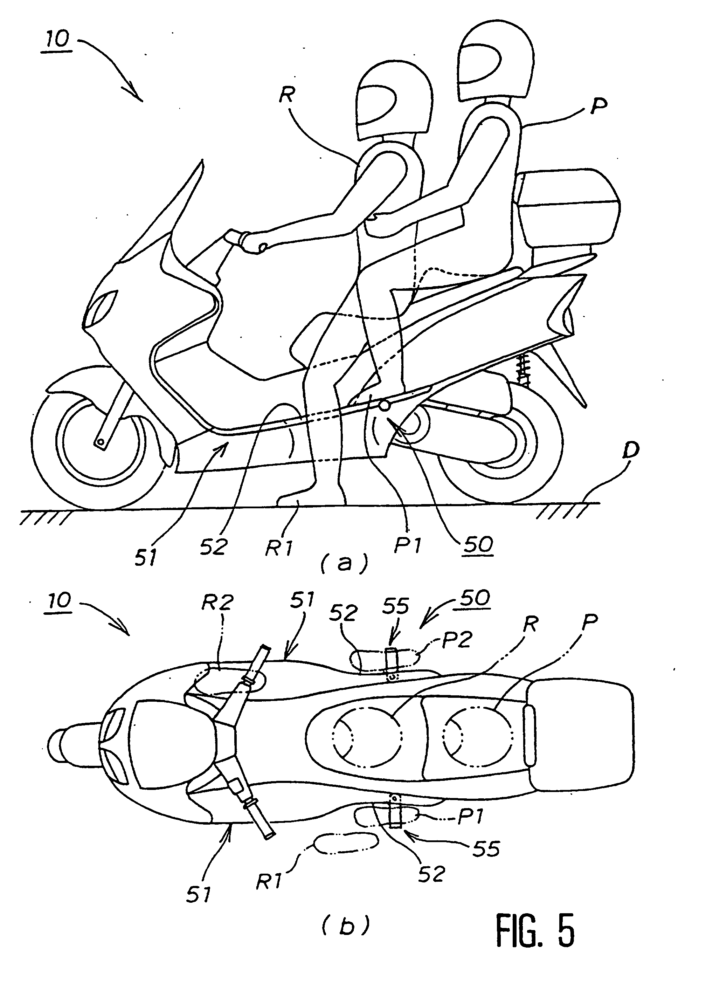

Figs. 5(a) and 5(b) are diagrams explaining a third function of the scooter floor step structure of the present invention, showing the state of the floor step structure 50 when two people, namely, the rider R and the passenger P, ride on the scooter and the scooter is stopped.

In Fig. 5(a), while stopping, the rider R puts his root R1 on the road D via the recess 52.

That is, as shown in Fig. 5 (b), the rider R puts his right foot R2 on the floor step 51, and his left foot R1 on the road D.

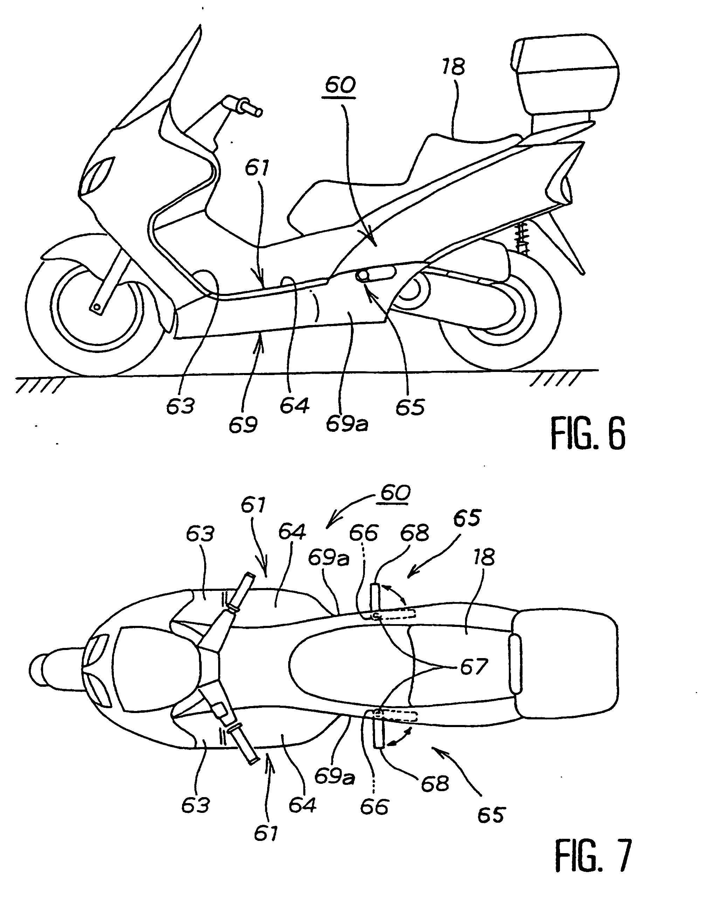

Fig. 6 is a side view of another scooter having a floor step structure.

A floor step structure 60 in figure 6 is a floor step structure for a two-seater scooter, comprising floor steps 61, 61 (one of the two steps 61, 61 is not shown) for receiving the rider's feet and passenger steps 65 retractably arranged behind the floor steps 61, 61. In this structure, the floor step 61, extending from the front side to the rear side below the seat 18, is cut off so as to have a predetermined length. As a result of thus cutting off the floor step 61, a recess 69a is formed on the floor skirt 69. A passenger step 65 is formed extending over the recess 69a.

Fig. 7 is a plan view showing the scooter of figure 6.

The floor step 61 has a sloping portion 63 formed below the seat 18, and a flat portion 64 extending backward from the sloping portion 63. The passenger step 65 comprises a supporting portion 66 formed behind the floor step 61 and a bar step 68 attached to the supporting portion 66 via a supporting pin 67 so as to be retractable in the front-rear direction.

The floor step structure 60 is of improved convenience due to separation of the floor steps 61 for receiving the rider's feet and the passenger steps 65. Also, separation between the floor steps 61 and the passenger steps 66 allows the rider to put his foot on the road via the space between the steps 61 and 65, so that the ease with which the rider can put his foot on the road can be improved. Moreover, the floor steps 61 and the passenger steps 65 can respectively be formed having desired widths and lengths.

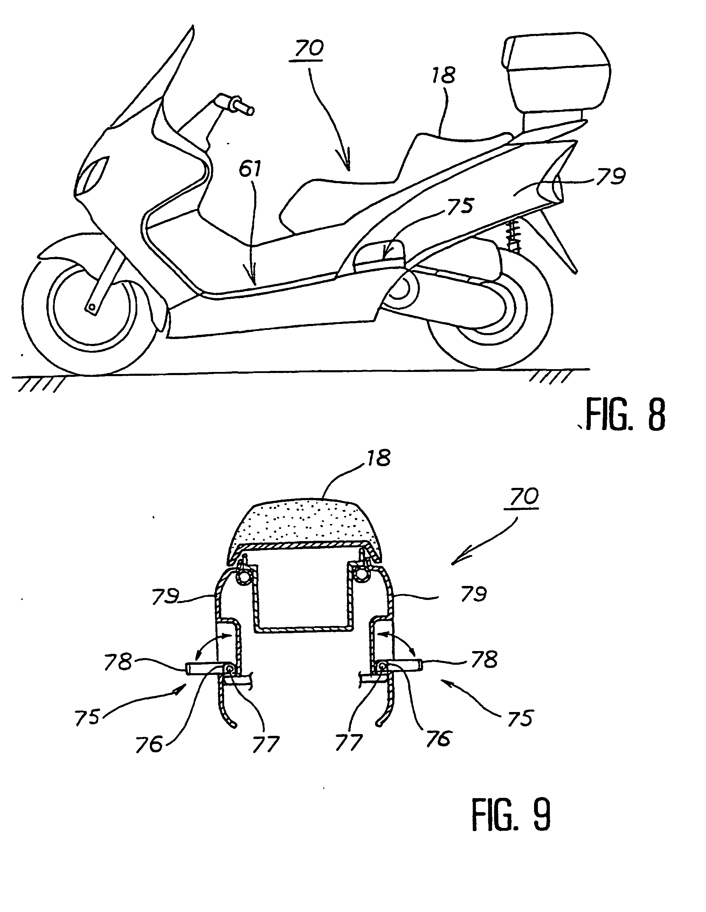

Fig. 8 is a side view of another scooter having a floor step structure. In the drawing, identical comportents to those in the floor step structures 50, 50 in figures 2 to 9 have identical reference numerals and detailed descriptions thereof are omitted.

The floor step structure 70 in figure 8 is a floor step structure for a two-seater scooter, comprising floor steps 61, 61 (one of the steps 61 is not shown) for receiving the rider's feet, and passenger steps 75, 75 (one of the steps 75, 75 is not shown) arranged behind the floor steps 61, 61 so as to be vertically retractable

Fig. 9 is a plan view showing the scooter of figure 8.

The passenger step 75 comprises a supporting portion 76 formed behind the floor step 61, and a sub-floor step 78 attached to the supporting portion 76 via a supporting pin 77 so as to be vertically retractable.

That is, the floor step structure 70 contributes to improvement in the design appearance as it is aligned flat with the side cover 79 when being stored.

Note that the floor step structure according to claim 1 is such that, as shown in the embodiment of Fig. 2, a recess 52 is formed on the floor step 51, and the passenger step 55 is formed extending over the recess 52

### Advantage of the Invention

The present invention provides the following advantage due to the above structure.

According to claim 1, when two people ride on the scooter, the retractable passenger step is extended to be used as a passenger's dedicated step. When a rider alone rides on the scooter, the passenger step is retracted. Thus, a larger area can be ensured for the recess, so that the ease with which the rider can put his foot on the road can be improved.

Also, as the passenger step is a dedicated step, it can be formed large in the vehicle width direction so that the ease with which the passenger can put his foot on the step can be improved.

While stopping due to a traffic signal and so on, the rider can put his foot on the road via the recess, so that the ease with which the rider can put his foot on the floor can be improved, and, for example, a situation where the rider's clothes are soiled can be prevented.

## Claims

1. A two-seater scooter (10) comprising a floor step structure (50) comprising two floor steps (51) adapted to receive the rider's feet and passenger's feet support means adapted to receive the passenger's feet, whereby a recess (52), opening sideward, is formed on a trailing portion of each floor step (51) to permit the rider to put his foot on the road via said recess (52), **characterized in that** said passenger's foot support means comprise retractable foot steps (55) adapted to be stored in respective storage sections (59) integrated in the trailing portions of the respective floor steps (51) .

## Patentansprüche

1. Zweisitziger Motorroller (10), umfassend eine Bodenbrettstruktur (50) umfassend zwei Bodenbretter (51), die dazu ausgelegt sind, die Fahrerfüße aufzunehmen, und Passagierfußstützmittel, die dazu ausgelegt sind, die Passagierfüße aufzunehmen, wobei eine seitlich geöffnete Ausnehmung (52) an einem hinteren Bereich jedes Bodenbretts (51) gebildet ist, um es dem Fahrer zu ermöglichen, mittels der Ausnehmung (52) seinen Fuß auf die Straße zu stellen, **dadurch gekennzeichnet, dass** die Passagierfußstützmittel einziehbare Fußrasten (55) umfassen, die dazu ausgelegt sind, in jeweiligen Unterbringungsabschnitten (59) untergebracht zu werden, die in die hinteren Bereiche der jeweiligen Bodenbretter (51) integriert sind.

## Revendications

1. Scooter à deux places (10) comprenant une structure de repose-pieds (50) comprenant de deux repose-pieds (51) adaptés pour recevoir les pieds du conducteur et de moyens de support de pieds de passager adaptés pour recevoir les pieds du passager, de telle sorte qu'un évidement (52) s'ouvrant vers le côté est formé sur une partie arrière de chaque repose-pied (51) pour permettre au conducteur de poser son pied sur le sol par ledit évidement (52), **caractérisé en ce que** lesdits moyens de support de pieds de passager comprennent des porte-pieds escamotables (55) adaptés pour être logés dans des sections de logement respectives (59) intégrées dans les parties arrière des repose-pieds respectifs (51).
